# EUROPEAN PATENT APPLICATION

(11) **EP 4 822 806 A1**
(43) Date of publication of application: **14.10.2026**
(21) Application number: 25877588.1
(22) Date of filing: 29.09.2025
(51) Int. Cl.: H01M 10/058, H01M 10/44, H01M 10/04

(54) **BATTERY CELL MANUFACTURING METHOD**

(30) Priority: 08.10.2024 KR 20240136525; 21.03.2025 KR 20250036661
(71) Applicant: LG Energy Solution, Ltd., Seoul 07335 (KR)
(72) Inventor: JO, Seungill, Daejeon 34122 (KR); KANG, Taeyeop, Daejeon 34122 (KR); PARK, Sungmin, Daejeon 34122 (KR)
(74) Representative: Goddar, Heinz J.
(86) International application number: PCT/KR2025/015369
(87) International publication number: WO 2026/079777

(57) **Abstract**

This battery cell manufacturing method comprises: a first aging step of increasing electrolyte wettability of a battery cell; and an activation step including a step of charging/discharging the battery cell in which the first aging step has been completed, wherein the first aging step includes performing a pressing cycle of pressing the battery cell and releasing the pressing at least once.

## Description

### Technical Field

The present disclosure relates to a method of manufacturing a battery cell.

This application claims the benefit of Korean Patent Application No. 10-2024-0136525, filed on October 8, 2024, and Korean Patent Application No. 10-2025-0036661, filed on March 21, 2025, in the Korean Intellectual Property Office, the disclosures of which are incorporated herein in their entireties by reference.

### Background Art

Unlike primary batteries, secondary batteries can be charged and discharged and thus can be applied in various fields such as digital cameras, mobile phones, laptops, hybrid vehicles and electric vehicles. Examples of secondary batteries include nickel-cadmium batteries, nickel-metal hydride batteries and nickel-hydrogen batteries, and recently, lithium-ion batteries are widely used.

In general, a secondary battery, including a lithium-ion battery (hereinafter referred to as a battery cell), may have a structure in which an electrode assembly in which one or more positive electrode plates and one or more negative electrode plates are alternately stacked with a separator interposed therebetween is accommodated inside a case.

A battery cell in which an electrode assembly is housed in a case and an electrolyte is injected may undergo an activation process. The activation process may include a pre-aging process to allow the electrolyte to be impregnated into the electrodes and separator constituting the electrode assembly, a charge-discharge process by which the battery cell impregnated with the electrolyte is charged and discharged, and an aging process to facilitate and stabilize ion movement inside the charged and discharged battery cell.

The longer the time required for each process, the longer the total time required to manufacture the battery cell. Specifically, the pre-aging process takes a significant amount of time. Therefore, there is a need to shorten the time required for the pre-aging process.

### Detailed Description of the Invention

### Technical Goals

The present disclosure is to solve at least some of the above-described problems of the existing art, and to provide a method of manufacturing a battery cell by which shortened is the duration of the pre-aging process by including an operation of applying pressure to the battery cell in the pre-aging process.

The present disclosure provides a method of manufacturing a battery cell by which solved is the problem of requiring a long time in the pre-aging process by inducing rapid impregnation of the electrolyte in the pre-aging process by repeatedly performing a pressure application process and a resting process for aging the battery cell prior to the aging process of the battery cell.

### Technical solutions

According to an example embodiment, a method of manufacturing a battery cell, the method including a first aging process to increase electrolyte wettability of the battery cell, and an activation process including charging and discharging the battery cell for which the first aging process is completed, and the first aging process is performing pressure cycle at least one time in which the battery cell is pressed and the pressing is released.

The first aging process may include performing the pressure cycle a plurality of times.

The first aging process may include a resting process, and the resting process may include aging the battery cell for which the pressure cycle is performed the plurality of times.

The first aging process may include a unit process in which the pressure cycle is performed the plurality of times and the resting process is performed, and the unit process may be performed two times or more than two times.

The performing the pressure cycle one time may take 20 minutes or less than 20 minutes.

The performing the first aging process may take 18 hours or less than 18 hours.

Further included may be a second aging process that is to increase electrolyte wettability of the battery cell for which the activation process is completed.

The method of manufacturing the battery cell may be used for the method of manufacturing the battery cell, and the pressing apparatus may include a first jig plate and a second jig plate that is disposed opposite to the first jig plate with the battery cell interposed therebetween, and may be configured to press the battery cell by decreasing a distance between the first jig plate and the second jig plate in the first aging process.

The pressing apparatus may further include a plurality of third jig plates that are formed between the first jig plate and the second jig plate with a predetermined distance therebetween, and a receiving part that is formed to accommodate the battery cell between one of the plurality of third jig plates and another one of the plurality of third jig plates that is adjacent to the one third jig plate.

The pressing apparatus may further include a sensor part that is disposed at one side of the second jig plate in order to measure pressure applied to the battery cell.

### Effects of the Invention

According to the example embodiments, even after sufficiently aging the battery cell, the time required for the battery cell manufacturing process can be shortened.

The effects achievable by the present disclosure are not limited to the effect mentioned above, and other effects not mentioned will be clearly understood by those of ordinary skill in the art to which the present disclosure pertains from the following description.

### Brief Description of Drawings

FIG. 1 is a diagram illustrating a manufacturing apparatus used in a method of manufacturing a battery cell according to an example embodiment.
FIG. 2 is a diagram illustrating a manufacturing apparatus used in a method of manufacturing a battery cell according to an example embodiment.
FIG. 3 is an exploded perspective view of a battery cell according to an example embodiment.
FIG. 4 is a diagram illustrating an electrode assembly of a battery cell according to an example embodiment.
FIG. 5 is a diagram illustrating the sequence of a method of manufacturing a battery cell according to an example embodiment.
FIG. 6 is a diagram illustrating a portion of a method of manufacturing a battery cell according to an example embodiment.
FIG. 7 is a diagram illustrating a pressing apparatus used in a method of manufacturing a battery cell according to an example embodiment.
FIG. 8 is a diagram illustrating a pressing apparatus used in a method of manufacturing a battery cell according to an example embodiment.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the directions shown in the drawing. If the direction of the object changes, the directions of the expressions also may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described with reference to the accompanying drawings. However, the present disclosure is not limited to the example embodiments disclosed herein. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

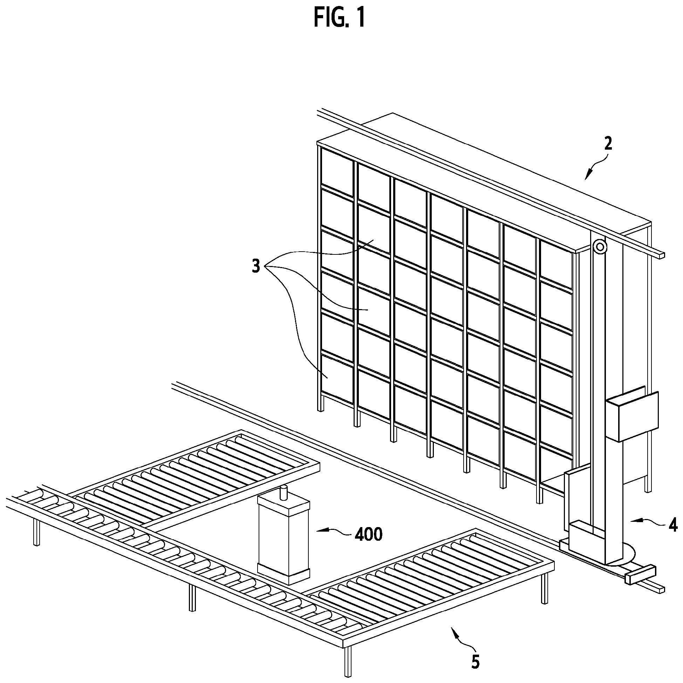

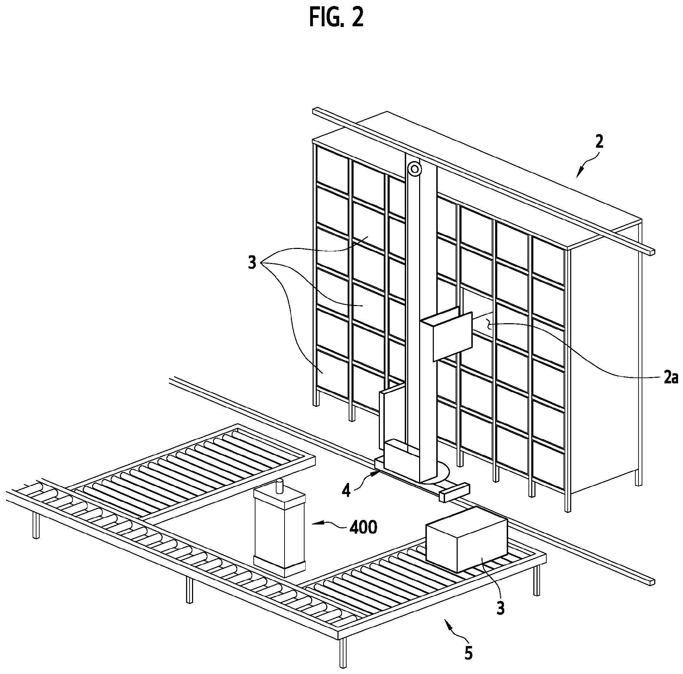

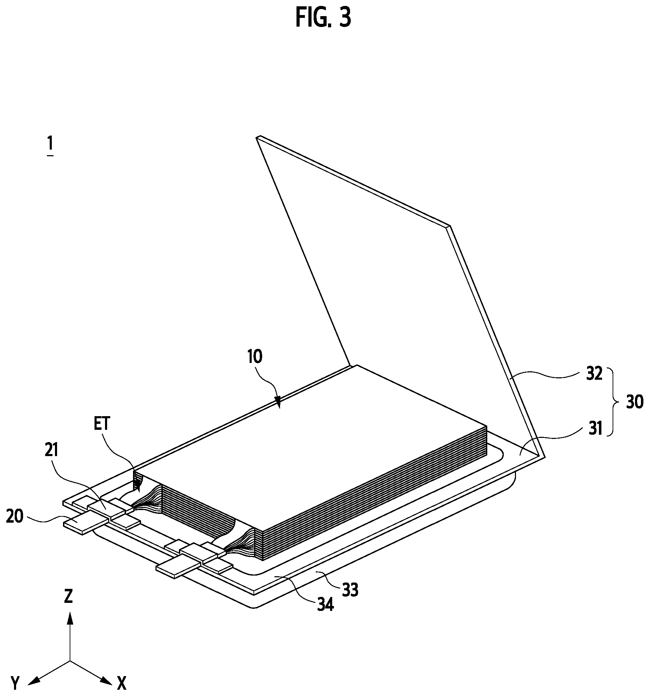

FIG. 1 and FIG. 2 are diagrams illustrating a manufacturing apparatus used in a method of manufacturing a battery cell 1 (see FIG. 3) according to an example embodiment.

Referring to FIG. 1 and FIG. 2, the manufacturing apparatus used in the method of manufacturing the battery cell 1 may include a shelf 2, a transfer apparatus 4, and a conveyor belt 5.

The shelf 2 may accommodate a tray 3 on which the battery cells 1 are loaded. The shelf 2 may include a tray receiving part 2a that accommodates the tray 3. The shelf 2 may have a structure in which a plurality of tray receiving parts 2a are arranged. Accordingly, the shelf 2 may be designed to accommodate a large number of trays 3 within a limited space. The shelf 2 may have a structure allowing insertion and removal of the tray 3.

The shelf 2 may include a shelf frame forming the exterior of the shelf 2. The shelf 2 may be made of a material having sufficient rigidity to stably support the load of the tray 3.

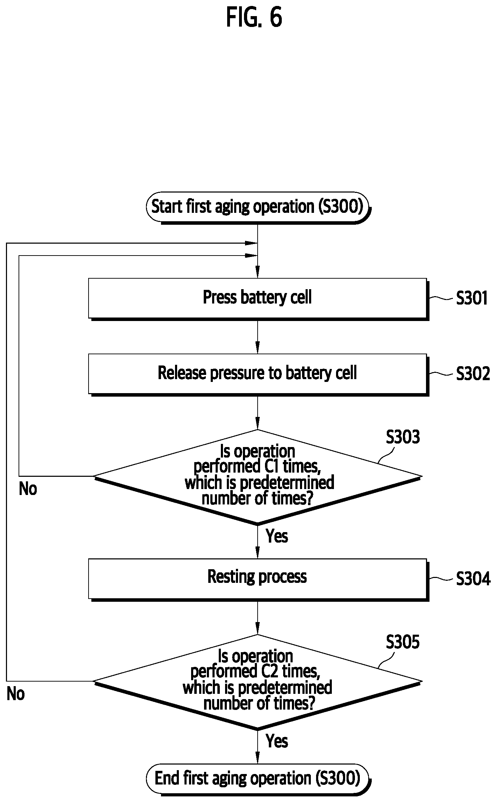

The tray 3 may accommodate a plurality of battery cells 1. The battery cell 1 accommodated in the tray 3 may undergo a resting process (S304, see FIG. 6), during which the electrolyte wettability may increase. The resting process (S304) may refer to a process in which the battery cell 1 ages in the tray 3 without being accommodated in a pressing apparatus 400. For example, the resting process (S304) may include aging the battery cell 1 after completion of a pressure cycle (S301, S302, see FIG. 6). The resting process (S304) may include aging the battery cell 1 in the tray 3 accommodated in the shelf 2 prior to the start of the pressure cycle (S301, S302), but is not limited thereto.

In the process of aging the battery cell 1, the electrolyte may be impregnated between the positive electrode plate and the negative electrode plate. The more the battery cell 1 is aged, the more the electrolyte may be evenly distributed inside the battery cell 1, and this facilitates ion movement between the positive electrode plate and the negative electrode plate.

The temperature at which the battery cell 1 ages in the shelf 2 may be higher than the temperature at which the pressure cycle (S301, S302) is performed. For example, the shelf 2 may include a heating device that applies heat to increase the temperature of the tray 3 accommodated in the shelf 2. This may promote the formation of a solid electrolyte interface (SEI) layer between the negative electrode plate and the electrolyte of the battery cell 1.

The transfer apparatus 4 may transport the tray 3. The transfer apparatus 4 may move along a transport rail extending in the direction in which the shelf 2 extends, thereby transporting the tray 3. The transfer apparatus 4 may be disposed between the conveyor belt 5 and the shelf 2 in the battery cell 1 manufacturing process to improve efficiency of manufacturing the battery cell 1.

The conveyor belt 5 may transport the tray 3. The conveyor belt 5 may transport the tray 3 received from the transfer apparatus 4 to a position corresponding to the pressing apparatus 400. The plurality of battery cells 1 accommodated in the tray 3 may be transported to the pressing apparatus 400 and undergo the pressure cycle (S301, S302), thereby increasing electrolyte wettability. The plurality of battery cells 1 undergone the pressure cycle (S301, S302) in the pressing apparatus 400 may be transferred back to the tray 3 and then transported by the conveyor belt 5, and may be stored back in the shelf 2 by the transfer apparatus 4.

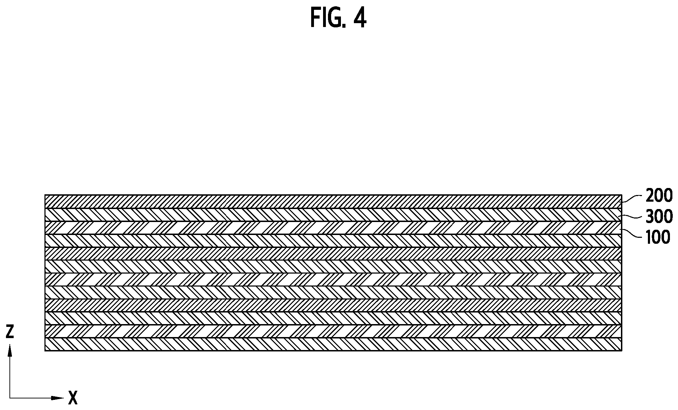

FIG. 3 is an exploded perspective view of the battery cell 1 according to an example embodiment, and FIG. 4 is a diagram illustrating an electrode assembly 10 of the battery cell 1 according to an example embodiment.

Referring to FIG. 3, the battery cell 1 may include the electrode assembly 10 having a structure in which a plurality of electrode plates are stacked, a case 30 accommodating the electrode assembly 10, and a lead tab 20 connected to the electrode assembly 10 and arranged such that a portion thereof is exposed to the outside of the case 30.

The case 30 may include an upper case 32 and a lower case 31 disposed on opposite sides of the electrode assembly 10. The upper case 32 and the lower case 31 may have an electrode accommodating part 33 formed therein to accommodate the electrode assembly 10 inside the case 30.

The case 30 may include a sealing part 34 disposed along the edge of the electrode accommodating part 33. The sealing part 34 may be formed by the upper case 32 and the lower case 31 being crimped or thermally welded along the edge of the electrode accommodating part 33. The sealing part 34 may block foreign substances or moisture from the outside of the case 30 from entering the electrode assembly 10 disposed in the electrode accommodating part 33.

The case 30 may be a pouch-type case made of a flexible material. For example, the case 30 may include an aluminum laminate sheet. However, the case 30 may be formed not only as a pouch-type case but also as a rectangular case or a cylindrical case including a metallic material such as aluminum

The lead tab 20 may include a conductive metallic material. For example, the lead tab 20 may include a material such as nickel (Ni), copper (Cu), nickel-plated copper and aluminum (Al). A sealing member 21 may be disposed between the lead tab 20 and the case 30.

The sealing member 21 may include an insulating material. As a result, the sealing member 21 may achieve electrical insulation between the lead tab 20 and the case 30.

The sealing member 21 may include an adhesive material. The sealing member 21 may be bonded to the sealing part 34 of the case 30. As a result, the sealing member 21 may block the space generated around the lead tab 20 when the case 30 is assembled.

Referring to FIG. 4, the electrode assembly 10 may include a structure in which a plurality of first electrode plates 100 and a plurality of second electrode plates 200 having opposite polarities are stacked with a separator 300 interposed therebetween. Specifically, the electrode assembly 10 may include a structure in which a stack structure of a first electrode plate 100, the separator 300, and a second electrode plate 200 is repeated. However, the first electrode plates 100, the separators 300 and the second electrode plates 200 illustrated in the drawing are merely examples, and a greater number of structures than those illustrated, or structures different from those illustrated, may be included.

The first electrode plate 100 and the second electrode plate 200 may be electrode plates having opposite polarities. For example, when the first electrode plate 100 is a negative electrode plate, the second electrode plate 200 may be a positive electrode plate.

The positive electrode plate may have a structure in which a positive active material layer is formed on a current collector. The positive electrode plate may be formed by coating a mixture of a positive active material, a conductive agent, and a binder onto a current collector made of an aluminum alloy. Here, the materials of the positive active material, binder, conductive agent, and current collector may all be applicable if they are known materials used in positive electrode plates of lithium secondary batteries.

The negative electrode plate may have a structure in which a negative active material layer is formed on a current collector. The negative electrode plate may be formed by coating a mixture of a negative active material, a conductive agent and a binder onto a current collector made of a copper alloy.

The battery cell 1 may include electrode tab bundles (ET) formed by grouping together electrode tabs of the same polarity from the electrode assembly 10. The lead tab 20, which serves as a terminal in the battery cell 1, may be coupled to the electrode tab bundle (ET), and accordingly, the electrode assembly 10 and the lead tab 20 may be electrically connected to each other. In bonding the electrode tab bundle (ET) and the lead tab 20, various welding methods including ultrasonic welding, or physical fastening methods using rivets or the like, may be applied.

When the first electrode plate 100 and the second electrode plate 200 come into contact, internal short-circuiting may occur, leading to heat generation due to chemical reactions. In order to prevent this, the battery cell 1 may include the separator 300 disposed between the first electrode plate 100 and the second electrode plate 200.

The separator 300 may be disposed between the first electrode plate 100 and the second electrode plate 200. The separator 300 may prevent possible electrical short circuits between the first electrode plate 100 and the second electrode plate 200. The separator 300 may be configured to allow ions to pass through by being impregnated with the electrolyte. The separator 300 may be formed of a porous polymer film or a porous nonwoven fabric. However, the material of the separator 300 is not limited thereto, and the material of the separator 300 may be any material capable of enhancing insulation between the first electrode plate 100 and the second electrode plate 200.

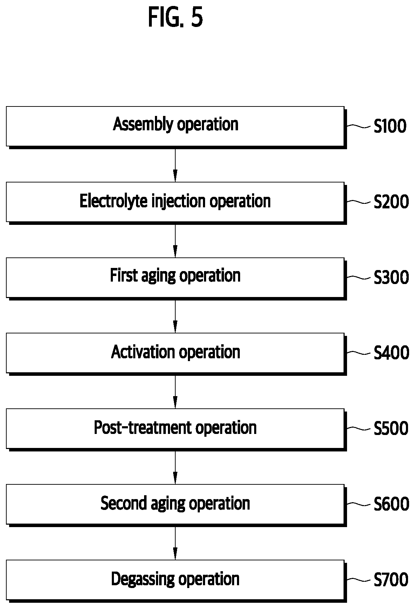

FIG. 5 is a diagram illustrating the sequence of a method of manufacturing the battery cell 1 according to an example embodiment, and FIG. 6 is a diagram illustrating a portion of a method of manufacturing the battery cell 1 according to an example embodiment.

Referring to FIG. 5, a method of manufacturing the battery cell 1 according to an example embodiment includes: an assembly operation (S100) of inserting the electrode assembly 10 including the first electrode plate 100, the second electrode plate 200 and the separator 300 into the case 30 to assemble the battery cell 1; an electrolyte injection operation (S200) of injecting an electrolyte into the case 30; a first aging process (S300) to increase the electrolyte wettability of the battery cell 1; an activation operation (S400) of charging and discharging the battery cell 1 after completion of the first aging process (S300); a post-treatment operation(S500); a second aging process (S600) to age the battery cell 1; and a degassing operation (S700) to remove internal gas from the battery cell 1.

The assembly operation (S100) may be forming the battery cell 1 by disposing inside the case 30 the electrode assembly 10 composed of the first electrode plate 100, the second electrode plate 200 and the separator 300.

The electrolyte injection operation (S200) may be injecting an electrolyte into the battery cell 1 formed in the assembly operation (S100). The electrolyte injected into the battery cell 1 may be in a liquid state. The battery cell 1 may be sealed by the sealing part 34 and the sealing member 21 to prevent foreign substances from entering the inside of the case 30 from the outside. The electrolyte may include an organic solvent, a lithium salt and an additive.

The organic solvent may allow lithium ions to dissolve well in the electrolyte. The organic solvent may be used if it undergoes decomposition due to oxidation reactions during the charging and discharging processes of the battery cell 1 to an extent of a certain level or less. For example, the organic solvent may be a cyclic carbonate, a linear carbonate, an ester, an ether, a ketone or the like. However, the organic solvent used in the battery manufacturing method of the present disclosure is not limited thereto.

The lithium salt may dissolve lithium ions in the electrolyte, enabling the movement of lithium ions. The lithium salt may be any lithium salt commonly used in the electrolyte of lithium secondary batteries without limitation.

The additive may improve the stability of the secondary battery. For example, the additive may be vinylene carbonate, fluoroethylene carbonate or the like. However, the additive used in the battery manufacturing method of the present disclosure is not limited thereto.

The first aging process (S300) may be an operation of impregnating and aging the electrode assembly 10 accommodated in the battery cell 1 with the electrolyte. The first aging process (S300), performed prior to the second aging process (S600), may include a process of leaving the battery cell 1 on a rack to allow aging. By including a plurality of aging operations (S300, S600), the manufacturing method of the battery cell 1 may increase the wettability of the battery cell 1. As the wettability of the battery cell 1 increases, the electrolyte may be sufficiently impregnated between the positive electrode plate and the negative electrode plate, and as a result, charging defects of the battery cell 1 may be prevented in the charge-discharge operation (S400). Further, when the wettability of the battery cell 1 is low, problems such as gas trapping between the positive electrode plate and the negative electrode plate, which may occur, can be prevented, and issues therefrom such as lithium plating and charging defects can also be prevented.

While the secondary battery is charged, when electrons move to the negative electrode plate and charge it, lithium ions may be adsorbed onto the negative electrode plate to maintain charge neutrality. The lithium ions may be adsorbed in regions where the electrolyte is impregnated. However, in regions not impregnated with electrolyte, adsorption may be relatively difficult. The battery cell 1 may promote impregnation of the electrolyte into the positive electrode plate and the negative electrode plate through the first aging process (S300).

The first aging process (S300) may be performed under temperature conditions of 20 to 30°C. However, the first aging process is not strictly limited and may be changed according to the characteristics of the battery cell.

As the time required for the first aging process (S300) increases, the production process of the battery cell 1 may be prolonged. In order to solve this problem, the first aging process (S300) may include a pressing operation (S301) to increase the electrolyte wettability of the battery cell 1 (see FIG. 6). For example, the first aging process (S300) may be performed for 18 hours or less, thereby preventing the production process of the battery cell 1 from becoming excessively long. The first aging process (S300) may be referred to as a pre-aging operation.

The activation operation (S400) may be an operation of charging and discharging the battery cell 1 to activate it. By performing the activation operation (S400), the battery cell 1 may acquire the characteristics of electrical energy storage. The activation operation (S400) may be forming an SEI layer between the negative electrode plate and the electrolyte. The SEI layer may prevent further decomposition reactions of the electrolyte. The SEI layer may act as an additional separator 300 that blocks electron movement while allowing only lithium ions to pass through.

However, the activation operation (S400) may include only the process of charging the battery cell 1. The charged battery cell 1 may undergo the second aging process (S600) and then be discharged again.

The post-treatment operation (S500) may be heat-treating the battery cell 1, after completion of the activation operation (S400), under a pressurized condition. The adhesion between the first electrode plate 100, the second electrode plate 200 and the separator 300 of the battery cell 1 may be improved by performing the post-treatment operation (S500). The increased adhesion due to the post-treatment operation (S500) may contribute to preventing bending deformation of the secondary battery.

The post-treatment operation (S500) may be performed at a temperature equal to or higher than the adhesive formation temperature. The adhesive formation temperature may be the temperature required to form adhesion between the first electrode plate 100 and the separator 300 and between the second electrode plate 200 and the separator 300. The adhesive formation temperature may be set differently depending on the components of the first electrode plate 100, the second electrode plate 200 and the separator 300.

The second aging process (S600) may be an operation of accommodating the activated battery cell 1 in a chamber maintained at a set temperature to allow aging. The SEI layer of the battery cell 1 formed on the surface of the negative electrode plate may be stabilized in the second aging process (S600). The set temperature of the second aging process (S600) may be 20 to 30 degrees. However, the set temperature of the second aging process (S600) may vary depending on the purpose.

The degassing operation (S700) may be an operation of discharging gas generated inside the case 30 of the battery cell 1 to the outside of the case 30. In the degassing operation (S700), a portion of the case 30 may be opened. The portion of the case 30 opened in the degassing operation (S700) may be re-sealed after gas is discharged.

Even though the drawing illustrates the method of manufacturing a battery including two aging operations (S300, S600), the present disclosure is not limited thereto, and depending on the purpose, additional aging operations, charging operations, or discharging operations may be included.

Referring to FIG. 6, the first aging process (S300) may include: an operation (S303) of performing the pressure cycle (S301, S302), in which the battery cell 1 is pressurized and then the pressure is released, a predetermined number of times (C1); the resting process (S304) for aging the battery cell 1; the process (S303) of performing the pressure cycle (S301, S302) a predetermined number of times (C1); and a process of performing the resting process (S304) a predetermined number of times (C2). For example, each of C1 and C2 may be a natural number equal to or greater than 1. In the present disclosure, the process (S303) of performing the pressure cycle (S301, S302) a predetermined number of times (C1) is referred to as the pressure cycle (S301, S302) C1 times.

The electrolyte wettability of the battery cell 1 after completion of the assembly operation (S100) and the electrolyte injection operation (S200) may increase in the first aging process (S300).

The pressure cycle (S301, S302) may include the process (S301) of applying pressure to the battery cell 1 and a process (S302) of releasing the pressure from the battery cell 1. The pressure release process (S302) of the battery cell 1 may be performed after the pressurization of the battery cell 1. In other words, the battery cell 1 may experience alternating increases and decreases in pressure through the pressure cycle (S301, S302). For example, one time pressure cycle (S301, S302) may take 20 minutes or less, and damage to the structure of the battery cell 1 or an excessive lengthening of the battery cell 1 production process may be prevented. Specifically, one time pressure cycle (S301, S302) may take 3 to 5 minutes.

The pressing operation (S301) may be an operation of increasing the pressure of the battery cell 1 to enhance the impregnation of the electrolyte into the first electrode plate 100 and the second electrode plate 200. The pressing operation (S301) may be performed by the pressing apparatus 400.

The pressing operation(S301) may be increasing the pressure of the battery cell 1 to enhance the impregnation of the electrolyte into the first electrode plate 100 and the second electrode plate 200. In other words, the pressing operation (S301) may be an operation of increasing the electrolyte wettability of the battery cell 1.

The pressing operation (S301) may be performed by the pressing apparatus 400. The pressing apparatus 400 may be a device that presses both sides of the battery cell 1 with plates. However, the pressing apparatus 400 that presses the battery cell 1 is not limited thereto, and various devices configured to increase the pressure of the battery cell 1, such as a device that changes the surrounding pressure, may be used.

The process (S302) of releasing the pressure may be performed by releasing the pressure by the pressing apparatus 400. When the pressure applied by the pressing apparatus 400 is released, the internal pressure of the battery cell 1 may decrease.

In the method of manufacturing the battery cell 1 of the present disclosure, at least one time of pressure cycle (S301, S302) may be performed. For example, in the method of manufacturing the battery cell 1 according to an example embodiment, the pressure cycle (S301, S302), in which the battery cell 1 is pressurized and then the pressure is released, may be performed 10 times. The method of manufacturing the battery cell 1 may include a process in which the pressure cycle is repeated C1 times, at predetermined time intervals. As the pressure cycle is repeated C1 times, the electrolyte wettability of the battery cell 1 may increase.

The first aging process (S300) may include the resting process (S304). The resting process (S304) may be performed after the pressure cycle is completed C1 times. For example, the resting process (S304) may be performed for four hours. For example, the duration of the resting process (S304) after the pressure cycle is completed C1 times may be set differently for each resting process (S304).

In other words, in the first aging process (S300), the pressure cycle may be performed C1 times, a predetermined number, and then the resting process (S304) may be performed. This may be referred to as a unit process (S301, S302, S303, S304). The first aging process (S300) may be performed by repeating the unit process (S301, S302, S303, S304) C2 times, a predetermined number.

C1, the number of times the pressure cycle (S301, S302) is performed, may vary depending on the state of the battery cell 1 or the target performance. Further, C1 may differ for each unit process. For example, after a unit process including 10 pressure cycles (S301, S302) and the resting process (S304) is performed, a subsequent unit process including 5 pressure cycles (S301, S302) and the resting process (S304) may be performed. Further, C2, the number of times the unit process (S301, S302, S303, S304) is performed, may vary depending on the state of the battery cell 1 or the target performance.

However, the method of manufacturing the battery cell 1 is not limited to the example embodiments. For example, the order or number of repetitions of each operation of the method of manufacturing the battery cell 1 may vary. Further, additional processes may be added between operations of the method of manufacturing the battery cell 1.

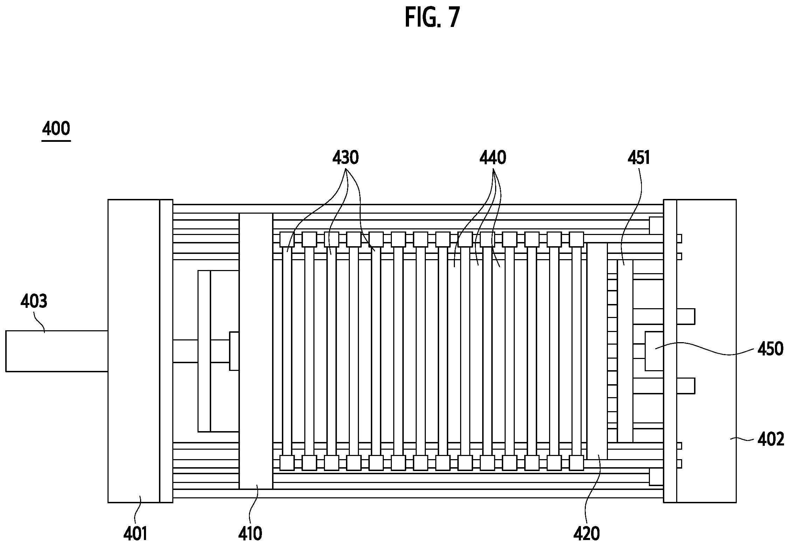

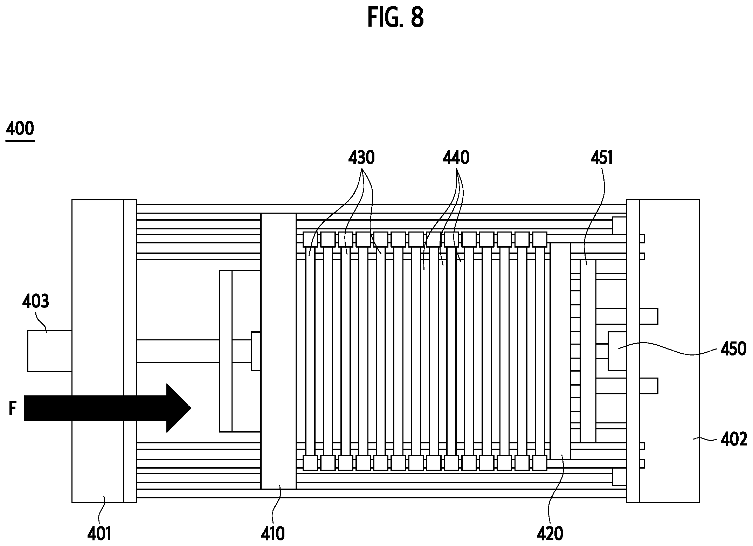

FIG. 7 and FIG. 8 are diagrams illustrating the pressing apparatus 400 used in a method of manufacturing the battery cell 1 according to an example embodiment. Specifically, FIG. 7 is a diagram showing the state of the pressing apparatus 400 before pressing the battery cell 1, and FIG. 8 is a diagram showing the state of the pressing apparatus 400 after pressing the battery cell 1.

Referring to FIG. 7 and FIG. 8, the pressing apparatus 400 used in the method of manufacturing the battery cell 1 according to an example embodiment of the present disclosure may include a first supporting plate 401 forming an exterior, a second supporting plate 402 disposed opposite to the first supporting plate 401, a first jig plate 410, a second jig plate 420 that is disposed opposite to the first jig plate 410, a plurality of third jig plates 430 disposed between the first jig plate 410 and the second jig plate 420, and a sensor part 450.

The first supporting plate 401 and the second supporting plate 402 may be formed in a plate shape. The first supporting plate 401 and the second supporting plate 402 may form the exterior of the pressing apparatus 400. A plurality of pillars for supporting the first supporting plate 401 and the second supporting plate 402 may be positioned between the first supporting plate 401 and the second supporting plate 402.

The first jig plate 410 may be formed in a plate shape. The first jig plate 410 may be disposed between the first supporting plate 401 and the second supporting plate 402. The first jig plate 410 may move between the first supporting plate 401 and the second supporting plate 402.

The second jig plate 420 may be formed in a plate shape. The second jig plate 420 may be disposed between the first supporting plate 401 and the second supporting plate 402. The second jig plate 420 may be fixed at a predetermined position between the first supporting plate 401 and the second supporting plate 402.

The first jig plate 410 and the second jig plate 420 may be arranged to face each other. The distance between the first jig plate 410 and the second jig plate 420 may decrease as the pressing apparatus 400 operates. For example, the second jig plate 420 may be fixed, and the first jig plate 410 may move toward the second jig plate 420.

The plurality of third jig plates 430 may be formed as a plurality of plate-shaped members arranged at predetermined intervals. As the distance between the first jig plate 410 and the second jig plate 420 changes, the distance between any one of the plurality of third jig plates 430 and an adjacent third jig plate 430 may change.

The pressing apparatus 400 may include a receiving part 440 formed between any one of the adjacent plurality of third jig plates 430 and another adjacent third jig plate 430. The battery cell 1 may be accommodated in the receiving part 440. When the pressing apparatus 400 is operated, as the distance between two adjacent third jig plates 430 decreases, both sides of the battery cell 1 may be pressed. As the battery cell 1 is pressed, generation of gas traps between the positive electrode plate and the negative electrode plate may be prevented or eliminated, and ultimately, defects in the battery cell 1 may be minimized.

The pressing apparatus 400 may further include a pressure cylinder 403 that is to provide a force for pressing the battery cell 1. The first jig plate 410 may move toward the second jig plate 420 or in the opposite direction. For this, one surface of the first jig plate 410 may be coupled to the pressure cylinder 403. The pressure cylinder 403 may transmit a force for pressing the battery cell 1 to the first jig plate 410. The pressure cylinder 403 may be a device employing various mechanisms, such as a hydraulic cylinder mechanism or a mechanism converting rotational force of a motor into linear motion.

The sensor part 450 may be used to measure the pressure of the battery cell 1 accommodated in the receiving part 440. The sensor part 450 may be disposed at one side of the second jig plate 420, for example, between the second jig plate 420 and the second supporting plate 402. For example, the sensor part 450 may include a load cell for measuring pressure. The pressure generated by the pressure cylinder 403 may be transmitted to the sensor part 450 through a sensor plate 451. However, the method by which the sensor part 450 measures the pressure applied to the battery cell 1 is not limited thereto. For example, the pressure applied to the battery cell 1 may also be measured based on the distance between adjacent third jig plates 430, the distance between the first jig plate 410 and the second jig plate 420, or the amount of displacement of the sensor plate 451.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described example embodiment may be implemented with some elements deleted, and each example embodiment may be implemented in combination with each other.

## Claims

1. A method of manufacturing a battery cell, the method comprising:
a first aging process to increase electrolyte wettability of the battery cell; and
an activation process comprising charging and discharging the battery cell for which the first aging process is completed,
wherein the first aging process is performing pressure cycle at least one time in which the battery cell is pressed and the pressing is released.

2. The method of manufacturing the battery cell of claim 1,
wherein the first aging process comprises
performing the pressure cycle a plurality of times.

3. The method of manufacturing the battery cell of claim 2,
wherein the first aging process comprises a resting process,
wherein the resting process comprises aging the battery cell for which the pressure cycle is performed the plurality of times.

4. The method of manufacturing the battery cell of claim 3,
wherein the first aging process
comprises a unit process in which the pressure cycle is performed the plurality of times and the resting process is performed,
wherein the unit process is performed two times or more than two times.

5. The method of manufacturing the battery cell of claim 4,
wherein performing the pressure cycle one time
takes 20 minutes or less than 20 minutes.

6. The method of manufacturing the battery cell of claim 1,
wherein performing the first aging process
takes 18 hours or less than 18 hours.

7. The method of manufacturing the battery cell of claim 1,
further comprising a second aging process that is to increase electrolyte wettability of the battery cell for which the activation process is completed.

8. The method of manufacturing the battery cell of claim 1,
wherein a pressing apparatus is used for the method of manufacturing the battery cell,
wherein the pressing apparatus
comprises a first jig plate and a second jig plate that is disposed opposite to the first jig plate with the battery cell interposed therebetween, and
is configured to press the battery cell by decreasing a distance between the first jig plate and the second jig plate in the first aging process.

9. The method of manufacturing the battery cell of claim 8,
wherein the pressing apparatus further comprises:
a plurality of third jig plates that are formed between the first jig plate and the second jig plate with a predetermined distance therebetween; and
a receiving part that is formed to accommodate the battery cell between one of the plurality of third jig plates and another one of the plurality of third jig plates that is adjacent to the one third jig plate.

10. The method of manufacturing the battery cell of claim 9,
wherein the pressing apparatus
further comprises a sensor part that is disposed at one side of the second jig plate in order to measure pressure applied to the battery cell.
